# EUROPEAN PATENT SPECIFICATION

(11) **EP 1 733 841 B1**
(45) Date of publication and mention of the grant of the patent: **27.04.2011**
(21) Application number: 05727418.5
(22) Date of filing: 28.03.2005
(51) Int. Cl.: B23Q 7/00, B23Q 7/03

(54) **METHOD AND DEVICE FOR DRIVINGLY TURNING CARRIAGE AND TIRE MOLDING SYSTEM USING THE METHOD AND THE DEVICE**
VERFAHREN UND VORRICHTUNG ZUM KRAFTBETRIEBENEN DREHEN EINES WAGENS UND DAS VERFAHREN UND DIE VORRICHTUNG VERWENDENDES REIFENFORMSYSTEM
MÉTHODE ET DISPOSITIF POUR FAIRE TOURNER UN CHARIOT PAR PILOTAGE ET SYSTÈME DE MOULAGE DE PNEU UTILISANT LA MÉTHODE ET LE DISPOSITIF

(30) Priority: 29.03.2004 JP 2004094678
(43) Date of publication of application: 20.12.2006
(73) Proprietor: Bridgestone Corporation, Tokyo 104-8340 (JP)
(72) Inventor: MINAKAWA, Masataka, Kodaira-shi, Tokyo 1878531 (JP)
(74) Representative: Whalley, Kevin
(86) International application number: PCT/JP2005/005720
(87) International publication number: WO 2005/092566

(56) References cited:
- EP-A- 0 398 219
- JP-A- 9 300 159
- JP-A- 2000 000 707
- JP-U- 5 044 440
- US-A- 1 631 124
- US-A- 4 509 637
- US-A- 5 195 630

## Description

The present invention relates to a method for pivotably driving a carriage which is run over an oval-shaped endless moving path, a device for pivotably driving a carriage used for carrying out the method and a tire building system using the device. In particular, the present invention proposes a technique for eliminating a driving source such as a motor to be mounted on a moving member such as a carriage, a carrier and the like.

There are conventionally proposed various tire building systems in which tire components are mounted onto a tire building drum, respectively, in a given order at workstations arranged along an endless rail, respectively, which constitutes an endless moving path of a carriage while the carriage equipped with the tire building drum is moved on the endless rail. Such a system is proposed in, for example, Japanese Patent Application No. 2002-341275.

The proposed building system has workstations configured to mount tire components onto a building drum, respectively; a building carriage configured to support the building drum to thereby move the building drum among the respective workstations; and carriage guiding means for guiding a movement of the building carriage on a predetermined path; wherein the carriage guiding means comprises: two inner and outer endless rails laid mutually parallel; and wheels provided on said building carriage, said wheels each being configured to roll, via roller or ball, on at least opposite side surfaces of associated one of said endless rails to thereby restrict a carriage position in a direction orthogonal to an extending direction of the endless rails; and wherein the endless rails are each configured with at least one straight portion and at least one arcuate portion which are smoothly continued to each other, and the arcuate portion has a rail width narrower than a rail width of the straight portion by an amount corresponding to a radius of curvature of the arcuate portion. According to this system, especially under an operation of the carriage guiding means which mainly consists of the pair of endless rails and the wheels provided on the building carriage to thereby tightly engage with at least opposite side surfaces of each of the endless rails and an operation of the arcuate portion of each of the endless rails which has a rail width narrower than that of the straight portion, the building carriage can be positioned with a higher precision relative to a direction intersecting the extending direction of the rail, thereby allowing a higher operating accuracy at each of the workstations by immediately achieving the predetermined accuracy of the stopping position of the carriage. Thus, there can be fully excluded here a facility, time and space for lifting up, centering/positioning and transferring the building, so that all of the problems that arise from them can be effectively solved.
Attention is also drawn to the disclosure of US-1631124A.

In these proposed techniques, however, when another driving means such as a motor for running the carriage is equipped on the carriage, supplies electricity and compressed air to the motor or the like, these techniques suffer from a problem that the configuration of the device is complicated and the installation cost, the running cost and the like are expensive.

The present invention has as its object to provide a method and device for pivotably driving a carriage, and a tire building system using same that can realize simplification of the configuration of the device and effective reduction of the installation cost and running cost, and, particularly, to secure superior moving accuracy of the carriage and to exert higher quietness and durability when the carriage runs over a curved portion of an oval-shaped endless moving path as well as allow simple and easy maintenance, and allowing smooth and secure transfer of the carriage to the carrier.

A method for pivotably driving a carriage according to the present invention comprises the steps of: engaging a carriage positioned on the ground side at a curved portion of an oval-shaped endless moving path consisting of a pair of inner and outer endless rails with a carrier driven along the curved portion over, for example, its entire length when the carriage is driven under a guide of the rails; and towing the carriage over the entire length of the curved portion with the carrier.

Preferably, the carrier is reciprocally moved along the same path by the action of traveling of a roller chain. It is also preferred that the carriage is positioned at the ground side by fitting a positioning pin displaced forwardly and backwardly from the ground side onto the carriage while the carriage is engaged with the carrier by fitting an engagement pin displaced forwardly and backwardly from the carriage side onto the carrier.

Moreover, according to the invention, a series of pivotably driving processes are carried out in the following ways: first, the carriage is engaged with the carrier in a state where the carriage is positioned and locked on the ground side, then the carriage is unlocked and towed over the entire length of the curved portion by the carrier, and finally the carriage is again positioned and locked on the ground side as well is disengaged from the carrier.

Meanwhile, the carrier which is moved outward while towing the carriage in this way is preferably returned to the original position to wait for the next towing. Before the engagement/disengagement of the carriage with the carrier, compressed air is preferably supplied to an engagement pin-actuating cylinder of the carriage.

A device for pivotably driving a carriage according to the present invention is to implement the above-described method, wherein an endless roller chain which is traveled along the curved portion over its entire length in the horizontal plane is disposed with the roller axis being aligned with the vertical line, and one or more carriers, for example only one carrier which can engage with/disengage from the carriage is mounted on the roller chain.

Preferably, a weight-supporting roll, for example, made of a resin material is mounted on the roller chain at every given pitch of its chain link. In addition, a wear resistance resin material for contacting with the roller, such as ultrahigh molecular weight polyethylene, high molecular weight polyethylene, polyamide, MC nylon and polyacetal, is arranged on a chain guide at the position which locates at least inside of the curvature of the roller chain extending along the curved portion and contacts with the chain.

It is also preferred that the roller chain extends between the pair of inner and outer rails and a driving train for the roller chain which manages rotational driving of a chain sprocket is arranged between these rails as well.

In such a device, positioning pins which are displaced forwardly and backwardly from the ground side to engage with and disengage from the carriage as well as means for supplying compressed air which is connected to and disconnected from an engagement pin-actuating cylinder of the carriage are preferably arranged on each of the positions backside of the entrance and front of the exit of the curved portion with respect to the traveling direction of the carriage.

A tire building system according to the present invention employs any of the above-described devices for pivotably driving a carriage, the system comprising carriages on which a tire building drum is positioned and placed, a concurrent driving means such as a cylinder and ball screw which simultaneously and intermittently transmits each of a plurality of carriages aligned on a straight portion of an oval-shaped endless moving path over a given distance, and workstations which perform given works on the tire building drum and are arranged at the positions respectively corresponding to the stopping positions of the carriages.

In the method for pivotably driving a carriage according to the present invention, since the carriage is towed by the carrier driven along the curved portion, a driving means for moving the carriage is not necessarily mounted on the carriage and thus supplying electricity and compressed air to the driving means can be eliminated. As a result, it is possible to simplify a device for carrying out the method including the carriage and to thereby advantageously reduce the installation and running costs. It is also possible to remove the risk of failure in the supplying systems of electricity, compressed air and the like to enhance the operation efficiency of the device as well as to simplify and facilitate maintenance of the device.

Further, if the carrier is driven in accordance with the running of the roller chain, the driving train with a simple configuration can give high moving accuracy to the carriage and also good silence and durability to the driving train. In this case, a necessary movement of the carrier within a limited space can be secured in a small occupied space by forwardly and backwardly moving the carrier along the same path.

In such a method, when the carriage is positioned by the positioning pin displaced forwardly and backwardly from the ground side, the carriage can be effectively released from the power source. On the other hand, when the carriage and the carrier are engaged by the engagement pin displaced forwardly and backwardly from the carriage side, the carrier can be released from the power source to, thereby, further simplify its configuration as well as to further downsize the whole carrier.

Meanwhile, in this method, when the carriage is firstly engaged with the carrier in a state where the carriage is positioned and locked on the ground side of the carriage, then the carriage is unlocked and towed over the entire length of the curved portion by the carrier, and finally the carriage is again positioned and locked on the ground side as well as being disengaged from the carrier, the carriage can be smoothly and securely transferred to the carrier or the like at all times. In addition, when the carrier which is moved outward while towing the carriage is returned to the original position to wait for the next towing, the operation efficiency can be sufficiently enhanced.

In the device for pivotably driving a carriage according to the present invention, an endless roller chain which is traveled along the curved portion over its entire length in the horizontal plane is disposed with the roller axis being aligned with the vertical line, so that the configuration of the driving train of the carrier can be simplified and it is possible to realize the above-mentioned high moving accuracy, silence and durability of the carriage.

The roller chain may tow and transfer one carriage, if one carrier is attached to the roller chain, or simultaneously a plurality of carriages, if a plurality of carriers are attached to the roller chain with leaving a given space therebetween, during its single outward displacement.

When the weight-supporting roll is mounted on the roller chain, loosening of the chain or the like can be effectively removed to further improve the moving accuracy of the carriage and to effectively prevent an increase of travel resistance of the chain, unexpected wear and the like.

In addition, when the wear resistance resin material for contacting with the roller is arranged on a chain guide at the position which locates inside of the curvature of the roller chain extending along the curved portion and contacts with the chain, each of the chain and chain guide, especially chain roller can be effectively prevented from being worn away. This may be further facilitated by arranging a wear resistance resin material on the chain guide at inside of the curved portion which consistently restrains the extending shape of the roller chain in a curved shape.

In such a device, when both of the roller chain and it driving train are arranged between a pair of rails, it is possible to easily secure a space for running the roller chain in an endless manner and to readily perform a maintenance of the roller chain and the driving train with exposing them between the rails.

Also, in such a device, when positioning pins which are displaced forwardly and backwardly from the ground side to engage with and disengage from the carriage as well as means for supplying compressed air which is connected to and disconnected from an engagement pin-actuating cylinder of the carriage are arranged on each of the positions backside of the entrance and front of the exit of the curved portion with respect to the traveling direction of the carriage, the carriage can be positioned and locked on a given position and the engagement pin at the carriage side can be smoothly and securely engaged with and disengaged from the carrier.

Furthermore, in a tire building system according to the present invention, the tire building drums are respectively positioned and placed on the carriages and a concurrent driving means such as a rodless cylinder simultaneously and intermittently transmits each of a plurality of carriages aligned on a straight portion of an oval-shaped endless moving path over a given distance, so that it is possible to effectively reduce the installation and running costs of the driving train and to facilitate its maintenance.

In addition, when the workstations which perform given works on the tire building drum are arranged at the positions respectively corresponding to the stopping positions of the carriages, predetermined tire components can be simultaneously mounted onto the tire building drum at each of the workstations. Moreover, when this is repeated until all of the mountings at the given workstations in the straight path portion are completed and these operations are conducted over the entire or nearly entire circumference of the endless moving path while the carriages are moved, a desired tire can be efficiently built on the tire building drum.

The invention will be further described with reference to the accompanying drawings, wherein
FIG. 1 is a schematic plan view of an embodiment of the tire building system.

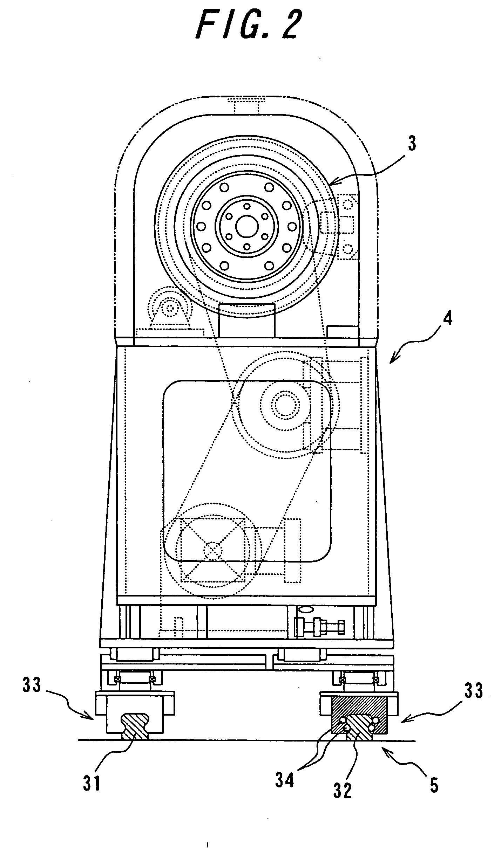

FIG. 2 is a partially sectional elevation view of the endless rails and the wheel.
FIG. 3 is an enlarged plan view of a substantial part of an embodiment of the device for pivotably driving a carriage.
FIG. 4 is a sectional view taken along the line A-A of FIG. 3.
FIG. 5 is an enlarged sectional view of the wear resistance resin material.
FIG. 6 is a sectional view taken along the line B-B of FIG. 3.
FIG. 7 shows the processes of an embodiment of the method for pivotably driving a carriage.

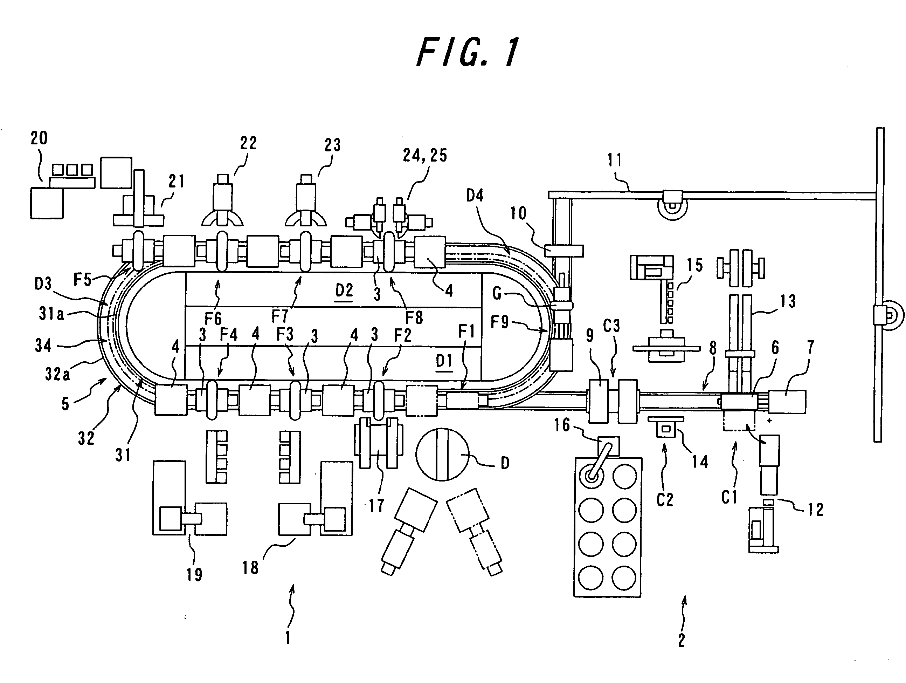

With reference to the drawings, one embodiment of the present invention will be discussed below. FIG. 1 is a schematic plan view of one embodiment of a tire building system according to the present invention together with a pre-building system. In the figure, the reference numeral 1 denotes a tire building system according to the present invention, and the reference numeral 2 denotes a pre-building system arranged next to the tire building system 1.

In this embodiment, the tire building system 1 has a building drum 3, a carriage 4 which positions and places the building drum 3 on it to support the drum in a cantilever manner and which rotates about the center axis of the drum, and a generally ellipse-shaped endless moving path 5 which enables a circular traveling of the carriage 4. The system is also provided with eight workstations F1-F8 for mounting the tire component members on the building drum 3, and the workstations are arranged along the moving path 5.

The pre-building system 2 has a supporting carriage 7 for supporting a cylindrical drum 6 in a cantilever manner, and a track 8 allowing the supporting carriage 7 to move linearly. The pre-building system 2 is also provided with three workstations C1-C3 arranged along the track, and a transfer carriage 9 which contributes to the building at the workstation C3 and which transfers pre-built articles to the building drum 3 of the tire building system.

In this figure, the reference numeral 10 denotes a tire displacing carriage which receives a green tire G manufactured in the tire building system 1 from the building drum 3 on the moving path 5, and the reference numeral 11 denotes a conveyor for carrying the green tire received from the tire transfer carriage to a vulcanizing system.

In the pre-building system, the supporting carriage 7 supporting the cylindrical drum 6 is moved from the workstation C1 to C2, then from C2 to C3 and finally from C3 to C1, while the transfer carriage 9 is reciprocated between the workstations C3 and F1.

In the tire building system 1, the carriage 4 supporting the toroidally outwardly deformable building drum 3 moves clockwise from one workstation to the adjacent workstation among the workstations F1-F8, for example from F1 to F2 and from F2 to F3, and this movement is repeated at a given takt time. It is noted that the tire building system 1 shown in this figure has eight carriages 4 arranged on the endless moving path 5 and each of the carriages 4 is driven between the workstations and positioned and stopped at each of the workstations with high accuracy, for example by a driving device arranged inside of the path 5.

In this figure, the carriages 4 located at each of the straight portions of the moving path 5 are simultaneously and intermittently transmitted by concurrent driving means D1, D2 which commonly serve to each of the straight portions, respectively. The carriages 4 passing through each of the curved portions of the moving path 5 are driven by respective driving devices D3 and D4 consisting of roller chains arranged to endlessly extend between a pair of inner and outer endless rails along the curved portions, and chain driving trains preferably arranged between the rails. With such a configuration, an operator can supervise the status of building the tire at each of the workstations from inside of the pair of inner and outer endless rails. In this embodiment, a plurality of carriages are simultaneously driven by the respective driving devices D1, D2 arranged at the straight portions, so that the number of components necessary for driving can be decreased to reduce the installation cost and improve the reliability of simultaneous driving or the like.

Positioning and locking of the carriages 4 on the positions precisely corresponding to the respective workstations F1-F8 after the carriages 4 are stopped can be performed by, of course, the driving device itself. When the driving portions of the concurrent driving device D1, D2 are preliminarily returned to a given positions to wait for the next driving of the carriages 4 in order to reduce the takt time, the positioning and locking may be realized by another locking means such as a positioning lock pin separately provided on the ground side.

The concurrent driving devices D1, D2 may be configured with a ball screw, cylinder or the like. For example, when it consists of a ball screw having a good driving accuracy, engagement pins displaced forwardly and backwardly by each of one or more female members, which may be a carriage-driving portion, are fitted onto the respective carriages 4 or the engagement pins displaced forwardly and backwardly by each of the carriages 4 are fitted onto the female members, so that the carriages 4 are brought into connection with the ball screws, and, under such conditions, the simultaneous and intermittent driving of the plurality of carriages 4 by means of the ball screw can be achieved by rotating the male members of the ball screws over given turns.

On the other hand, the carriages 4 after completing the simultaneous and intermittent driving remain in the above-described connected state or are positioned by separate positioning lock pins to wait for the completion of given operations on the building drum 3 at each of the workstations F1-F8.

After finishing the operations at each of the workstations in this way, the female screw members which always have the same stroke at the same position are brought into engagement with the next carriages 4 to thereby simultaneously and intermittently displace the plurality of carriages again. Thereafter, identical operations are repeated to manufacture a given green tire on each of the building drums 3.

In the pre-building system 2, prior to manufacturing the green tire on the tire building system 1 in this way, an inner liner member and a canvas chafer member are firstly mounted on the cylindrical drum 6 at the workstation C1 with using an inner liner member-mounting device 12 and a canvas chafer member-mounting device 13, respectively. Then, the cylindrical drum 6 is moved to the workstation C2 and a squeegee member and a carcass member are mounted on the outer circumference of the inner liner member and the canvas chafer member with using a squeegee member mounting device 14 and a carcass member mounting device 15 to thereby form a carcass band.

At the workstation C3, a pair of preset beads in which a bead filler is preset on a bead core are preliminarily set on the transfer carriage 9 by means of a handling robot 16. The carcass band formed at the workstation C2 is inserted and arranged radially inside of the pair of preset beads already set, and the carcass band is transferred from the cylindrical drum 6 to the transfer carriage 9.

After that, the transfer carriage 9 gripping the preset beads and the carcass band is moved to the workstation F1 in the tire building system 1 in which the building drum 3 is ready, and they are transferred and placed on the building drum 3. Such a placement can be performed by radially expanding the bead lock portion of the building drum 3 to lock the preset bead on the building drum 3, then releasing the transfer carriage 9 from the preset bead and returning the transfer carriage 9 to the station C3.

The specific operations at the workstations F2-F8 after the preset beads and the carcass band are transferred in the building system in this way is, for example, that the building drum 3 is moved to the workstation F2, and the transversal center portion of the carcass band is toroidally outwardly deformed in accordance with the radial expansion of bladder and rigid core and the side portions of the carcass member are turned radially outwardly by the action of carcass turning rod due to an actuation of an external driving device 17.

After that, the building drum 3 is sequentially moved among the workstations F3-F8 in the above-described manner and is positioned and locked on the workstations to carry out the following operations.

At the workstation F3, an inner layer belt member is mounted under a support of an external force due to a radially expanded rigid core by means of an inner layer belt member mounding device 18, and, at the workstation F4, an outer layer belt member is mounted by means of an outer layer belt member mounting device 19.

At the workstation F5, a spiral layer member and a tread undercushion member are mounted in this order by means of a layer member mounting device 20 and a tread undercushion member mounting device 21, respectively.

At the workstation F6, a base tread member is mounted by means of a base tread member mounting device 22, and, at the workstation F7, a cap tread member is mounted by means of a cap tread member mounting device 23.

Further, at the workstation F8, sidewall members are mounted on both sides of the tire in the course of building by means of a sidewall member mounting device 24, and rubber chafer members are mounted radially inside of the sidewall member by means of a rubber chafer mounting device 25. A given green tire is built in this way.

In such a process of manufacturing the green tire, the building drum 3 makes it possible to toroidally expand the carcass band and mount various members until completing the green tire while keeping the bead in the locked state, so that tire quality such as uniformity can be remarkably improved as compared with the conventional building method which have to unlock the beads between the operations to transfer them among the workstations.

The completed green tire G is subjected to an operation such as attaching a barcode at the final workstation F9, then it is removed from the building drum 3 by the tire transport carriage 10 to pass over to a tire carrying conveyor 11 which carries it to a tire vulcanization system.

Meanwhile, the building drum 3 in such a building system 1 is configured such that distances between the bead lock portions and between the rigid cores on the right and left sides may be arbitrarily changed to be able to deal with tire component members in different widths. However, for tires having different rim diameters, it is necessary to replace the building drum itself to handle them. Therefore, in this embodiment, a drum replace station D is arranged next to the track 5 in order that the building drum can be replaced within a given takt time.

In the above-described tire building system 1, in order to guide the movement of the carriage 4 on the endless moving path 5, a pair of inner and outer endless rails 31, 32 are laid in parallel to each other on the ground side, and wheels 33 which tightly engage with the endless rails 31, 32 to precisely restrict the position of the carriage in the direction perpendicular to the extending directions of the rails 31, 32 are provided on the carriage 4.

As shown in FIG.1, the endless rails 31, 32 are in parallel to each other, oppositely placed and preferably composed of two straight portions with an equal length and two arcuate curved portions which smoothly connect both ends of the straight portions. Preferably, each of the wheels 33 which engage with the rails 31, 32 tightly, in other words without any play, is provided with a plurality of balls rolling on both sides of the rails 31, 32 or is provided with a plurality of rollers rolling on both the side and the top of the rails 31, 32 to improve the position-restricting function of the wheels 33. In the former case, the wheels 33 preferably consist of a ball-recirculation type slide table such as a slider in a direct movement guide.

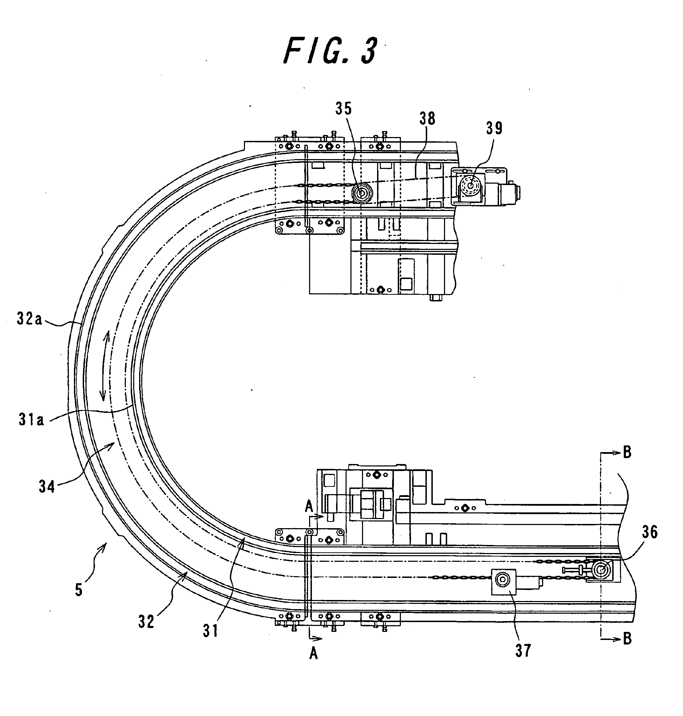

In order to obtain higher moving accuracy of the carriage 4, at the curved portions of the endless moving path 5, i.e. the arcuate curved portions smoothly connecting the straight portions of the endless rails 31, 32, as can be seen in FIG. 3 shown as a enlarged plan view of a substantial part, an endless roller chain 34 which is driven in the horizontal plane is arranged and extended between the curved portions 31a, 32a of the rails 31, 32, respectively, along the entire curved portions 31a, 32a, in this example over the entire length of the curved portions 31a, 32a, with the roller axis being aligned with the vertical line. Also, the extended ends of the roller are preferably arranged to be wound around
driving and driven sprockets 35, 36, respectively, and a carrier 37 which is engaged with and disengaged from the carriage 4 is attached to the roller chain 34 at the extending part, in this example the outer extending part of the curved portion. The carrier 37 is preferably movable on the midpoint between the rails 31, 32 based on the displacement of the roller chain 34.

The driving sprocket 35 is connected to a motor 39 via, for example, a chain 38 to forwardly and reversely drive the roller chain itself, more precisely to move the carrier 37 back and forth between the sprockets 35, 36.

The chain 38 and motor 39 which are used as a driving train of the roller chain 34 may be arranged either inside or outside of the rails 31, 32, and, as can be seen in the figure, they may be arranged between the rails to facilitate the maintenance of the roller chain 34 including the driving train.

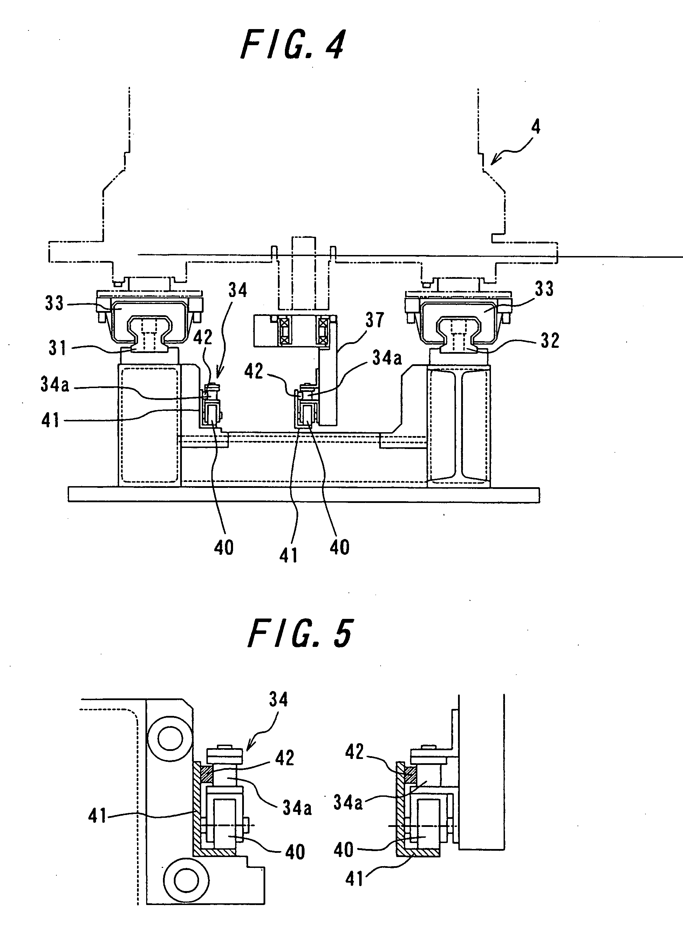

To the roller chain 34 thus arranged, weight-supporting rolls 40 which roll on the horizontal plane and which may be made of polyacetal are preferably attached at every given pitch of the chain link of the chain 34, as exemplarily shown in FIG. 4 taken along the line A-A of FIG. 3, to support the weight of the chain with the supporting rolls 40 and, thereby, effectively remove loosening of the roller chain 34.

A wear resistant resin material 42 is preferably arranged on the chain guide 41 by fixing or gluing to ensure the wear resistance of the roller chain 34 and chain guide 41. In this embodiment, the chain guide is disposed at the curved portion of the roller chain itself extending along the arcuate curved portions 31a, 32a, restricts the curve of the chain, has an L-shaped cross section and constitutes the rolling path of the supporting roll. The wear resistant resin material contacts the roller 34a of the chain 34 as shown in FIG. 5 with enlarging the substantial portion and is made of, for example, ultrahigh molecular weight polyethylene, high molecular weight polyethylene, polyamide, MC nylon and polyacetal.

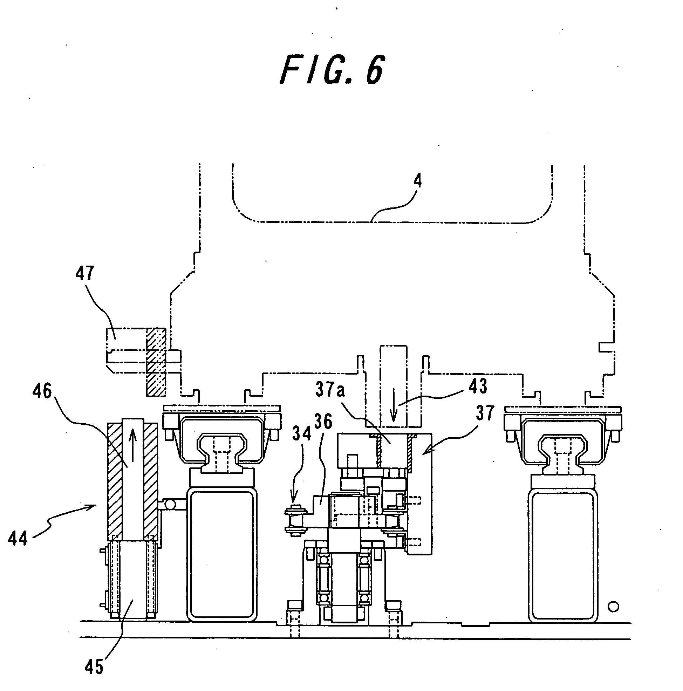

The carriage 4 can be engaged with the carrier 37 attached to the roller chain by inserting an engagement pin 43 provided on the carriage 4 into an engagement hole 37a provided on the carrier 37 with an action of an air cylinder, as shown in FIG. 6 which is a sectional view of carrier 37 taken along the line B-B in FIG. 3 in a state where the carrier 37 is aligned with the driven sprocket 36. Such an engagement may be released by exhausting the pressure in the air cylinder to return the engagement pin 43 by itself, or by supplying the pressure to the reciprocal air cylinder. When the engagement pin 43 engages with the carrier 37, it is possible to tow the carriage 4 over the entire length of the arcuate curved portions 31a, 31b along with the carrier 37 moved by the driving of the roller chain 34.

For the purpose of engagement/disengagement actions of the engagement pin 43 on the carriage 4, a compressed air supplying means which supplies pressure to a pin actuating cylinder of the carriage 4 at least before, and preferably before and after starting to tow the carriage 4 is preferably provided on the actuating cylinder in a connectable and detachable manner. This can sufficiently eliminate complexity of pipes and their arrangement as well as a likelihood of an improper operation by separating the compressed air supplying means from the actuating cylinder of the carriage 4 at least while the carriage 4 is being moved.

Accordingly, after the engagement pin 43 of the carriage 4 is engaged with the carrier 37 by means of the compressed air from the compressed air supplying means, the compressed air supplying means is separated from the carriage 4 to securely maintain the engagement state. On the other hand, after towing of the carriage 4, pressure is supplied by another compressed air supplying means connected to the actuating cylinder to disengage them, and thus the carriage 4 is completely separated from the carrier 37 to sufficiently allow the concurrent driving means to intermittently transmit the carriage 4.

In addition, in order to enable smooth and secure engagement and disengagement of the engagement pin 43 with the carrier 37, positioning means 44 for positioning and locking the carriage 4 on the ground side are arranged on each of the positions backside of the entrance and front of the exit of the curved portions 31a, 32a with respect to the traveling direction of the carriage. The positioning means consist of a pneumatic cylinder 45 attached perpendicular to the floor and a positioning pin 46 displaced back and forth by the cylinder 45. The positioning pin 46 is inserted into a notch 47 or a hole formed in the carriage 4 to position and lock the carriage 4 at the ground side.

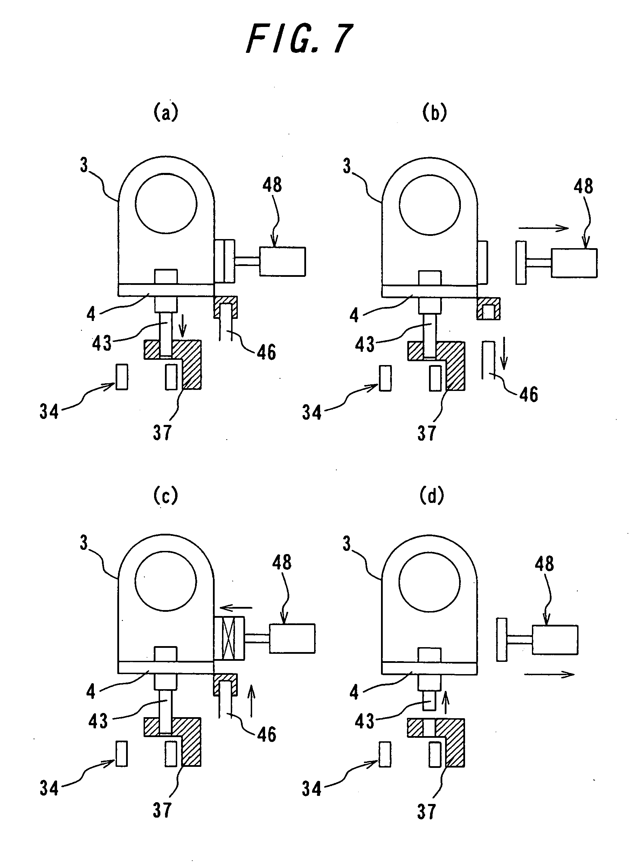

In order for the carriage engaged with the endless rails 31, 32 to be moved along and passed over the arcuate curved portions 31a, 32a of the endless rails by means of the device for pivotably driving the carriage thus configured, for example, after the concurrent driving means D1, D2 linearly transmitting the carriage 4 on which the building drum 3 for the green tire is positioned and placed, the positioning pin 46 provided on the ground side is firstly fitted in the notch 47 on the carriage to position and lock the carriage 4 on the ground side. Then, as schematically illustrated in FIG. 7(a), the engagement pin 43 is displaced forwardly by the supplied pressure from the compressed air supplying means 48 connected to the carriage 4 to engage the pin 43 with the carrier 37. Subsequently, as shown in FIG. 7(b), the compressed air supplying means 48 is separated from the carriage 4 and the positioning pin 46 is withdrawn to release the restriction of the carriage 4 at the ground side.

After that, the driving trains 38, 39 of the roller chain 34 are actuated to displace the roller chain itself. This causes the carrier 37 attached to the chain 34 to forwardly move entirely over the curved portions 31a, 32a. As a result, the carriage 4 is towed and passed over the curved portions 31a, 32a.

In this case, the towing of the carriage 4 can be performed with high positioning accuracy, so that even if one or more workstations is provided in the curved portions 31a, 32a, the carriage 4 can be accurately positioned and stopped at the given position and be locked there.

After the carriage completely passes over the curved portions, in order to relegate the transmission of the carriage 4 to the concurrent driving means D1, D2, the carriage 4 is positioned and locked at the ground side by the positioning pin 46 and the engagement pin 43 is backwardly moved while the compressed air supplying means 48 is connected to the carriage 4 as shown in FIG. 7(c). As shown in FIG. 7(d), the engagement between the engagement pin and the carrier 37 is released, and the compressed air supplying means 48 is again separated from the carriage 4.

In this way, the carriage 4 and thus the building drum 3 placed on the carriage pass over the curved portions 31a, 32a and thereafter they are sequentially, linearly and intermittently driven to each of the workstations F1-F8 by the concurrent driving means D1, D2, as described in the above. At each of the stations, a given operation is carried out on the building drum 3.

The carrier 37 which finishes the towing of the carriage 4 and is released from the carriage 4 is backwardly moved on the same path as the forward movement to the original position by the reverse movement of the roller conveyor 34. The carrier waits for the next similar towing there.

Therefore, it is not necessary to provide a driving means such as a motor on the carriage 4 for driving the carriage 4 on the curved portions of the oval-shaped endless moving path. This also applies to the carrier 37, so that it is possible to simplify and downsize the configuration of the carriage and carrier itself. Further, it is also possible to simplify the entire configuration of the driving device to advantageously reduce the installation and running costs.

The above description, merely one embodiment according to the present invention has been described with reference to the drawings. Components other than a tire building drum may be placed on the carriage, and the carriage may pivotably move by itself.

## Claims

1. A method for drivingly turning a carriage comprising the steps of:
engaging a carriage (4) positioned on the ground side at a curved portion (31 a, 32a) of an oval-shaped endless moving path (5) consisting of a pair of inner and outer endless rails (31, 32) with a carrier (37) driven along the curved portion when the carriage is driven under a guide of the rails; and
towing the carriage over the entire length of the curved portion by the carrier,
**characterized in that** the carriage (4) is engaged with the carrier (37) in a state where the carriage is positioned and locked on the ground side, then the carriage is unlocked and towed over the entire length of the curved portion by the carrier, and subsequently the carriage is again positioned and locked on the ground side and is disengaged from the carrier.

2. A method for drivingly turning a carriage according to claim 1, wherein the carrier (37) is reciprocally moved along the same path by the action of traveling of a roller chain (34).

3. A method for drivingly turning a carriage according to claim 1 or 2, wherein the carriage (4) is positioned at the ground side by fitting a positioning pin (46) displaced forwardly and backwardly from the ground side onto the carriage while the carriage is engaged with the carrier (37) by fitting an engagement pin (43) displaced forwardly and backwardly from the carriage side onto the carrier.

4. A method for drivingly turning a carriage according to any of claims 1 to 3, wherein the carrier (37) which is moved outward while towing the carriage (4) is returned to the original position.

5. A method for drivingly turning a carriage according to any of claims 1 to 4, wherein compressed air is supplied to an engagement pin-actuating cylinder of the carriage (4) before the engagement/disengagement of the carriage with the carrier (37).

6. A device for implementing a method for drivably turning a carriage according to any of claims 1 to 5, wherein an endless roller chain (34) which is traveled along the curved portion over its entire length in the horizontal plane is disposed with the roller axis being aligned with the vertical line, and at least one carrier (37) which can engage with/disengage from the carriage (4) is mounted on the roller chain.

7. A device for drivably turning a carriage according to claim 6, wherein a weight-supporting roll (40) is mounted on the roller chain (34) at every given pitch of its chain link.

8. A device for drivably turning a carriage according to claim 6 or 7, wherein a wear resistance resin material (42) for contacting with the roller is arranged on a chain guide (41) at the position which locates at least inside of the curvature of the roller chain (34) extending along the curved portion and contacts with the chain.

9. A device for drivably turning a carriage according to any of claims 6 to 8, wherein the roller chain (34) extends between the pair of inner and outer rails (31, 32) and a driving train for the roller chain is arranged between these rails.

10. A device for drivably turning a carriage according to any of claims 6 to 9, wherein positioning pins displaceable forwardly and backwardly from the ground side to engage with and disengage from the carriage (4) as well as means (48) for supplying compressed air which is connected to and disconnected from an engagement pin-actuating cylinder of the carriage are arranged on each of the positions backside of the entrance and front of the exit of the curved portion with respect to the traveling direction of the carriage.

11. A tire building system (1) using a device for drivably turning a carriage according to any of claims 6 to 10, comprising carriages (4) on which a tire building drum (3) is positioned and placed, a concurrent driving means (D1, D2) which simultaneously and intermittently transmits each of a plurality of carriages aligned on a straight portion of an oval-shaped endless moving path over a given distance, and workstations (F) which perform given works on the tire building drum and are arranged at the positions respectively corresponding to the stopping positions of the carriages.

## Patentansprüche

1. Verfahren zum angetriebenen Drehen eines Wagens, das die folgenden Schritte aufweist:
Eingreifen eines Wagens (4), der auf der Bodenseite in einen gebogenen Abschnitt (31a, 32a) einer ovalen endlosen Bewegungsbahn (5) positioniert ist, die aus einem inneren und äußeren Endlosschienenpaar (31, 32) besteht, in einen Träger (37), der längs des gebogenen Abschnittes angetrieben wird, wenn der Wagen unter einer Führung der Schienen angetrieben wird; und
Ziehen des Wagens über die gesamte Länge des gebogenen Abschnittes mittels des Trägers,
**dadurch gekennzeichnet, dass** der Wagen (4) mit dem Träger (37) in einem Zustand in Eingriff gebracht wird, wo der Wagen auf der Bodenseite positioniert und verriegelt ist, danach der Wagen entriegelt und über die gesamte Länge des gebogenen Abschnittes mittels des Trägers gezogen wird, und anschließend der Wagen wiederum auf der Bodenseite positioniert und verriegelt und vom Träger getrennt wird.

2. Verfahren zum angetriebenen Drehen eines Wagens nach Anspruch 1, bei dem der Träger (37) längs der gleichen Bahn infolge des Vorganges der Bewegung einer Rollenkette (34) hin und her bewegt wird.

3. Verfahren zum angetriebenen Drehen eines Wagens nach Anspruch 1 oder 2, bei dem der Wagen (4) auf der Bodenseite positioniert wird, indem ein Positionierstift (46) angebracht wird, der vorwärts und rückwärts von der Bodenseite auf den Wagen verschoben wird, während der Wagen mit dem Träger (37) in Eingriff gebracht wird, indem ein Eingriffsstift (43) angebracht wird, der vorwärts und rückwärts von der Wagenseite auf den Träger verschoben wird.

4. Verfahren zum angetriebenen Drehen eines Wagens nach einem der Ansprüche 1 bis 3, bei dem der Träger (37), der während des Ziehens des Wagens (4) nach außen bewegt wird, in seine Ausgangsposition zurückgeführt wird.

5. Verfahren zum angetriebenen Drehen eines Wagens nach einem der Ansprüche 1 bis 4, bei dem Druckluft einem Eingriffsstiftbetätigungszylinder des Wagens (4) vor dem Eingriff/der Trennung des Wagens mit dem/vom Träger (37) zugeführt wird.

6. Vorrichtung zur Durchführung eines Verfahrens zum angetriebenen Drehen eines Wagens nach einem der Ansprüche 1 bis 5, bei der eine endlose Rollenkette (34), die längs des gebogenen Abschnittes über seine gesamte Länge in der horizontalen Ebene bewegt wird, so angeordnet wird, dass die Rollenachse mit der vertikalen Linie ausgerichtet ist, und bei der mindestens ein Träger (37), der mit dem/vom Wagen (4) in Eingriff kommen oder davon getrennt werden kann, auf der Rollenkette montiert ist.

7. Vorrichtung zum angetriebenen Drehen eines Wagens nach Anspruch 6, bei der eine das Gewicht tragende Rolle (40) auf der Rollenkette (34) bei jedem vorgegebenen Abstand ihres Kettengliedes montiert ist.

8. Vorrichtung zum angetriebenen Drehen eines Wagens nach Anspruch 6 oder 7, bei der ein verschleißfestes Harzmaterial (42) für ein Kontaktieren mit der Rolle auf einer Kettenführung (41) in der Position angeordnet ist, die mindestens die Innenseite der Krümmung der Rollenkette (34) lokalisiert, die sich entlang des gebogenen Abstandes erstreckt und mit der Kette in Kontakt kommt.

9. Vorrichtung zum angetriebenen Drehen eines Wagens nach einem der Ansprüche 6 bis 8, bei der sich die Rollenkette (34) zwischen dem inneren und äußeren Schienenpaar (31, 32) erstreckt, und bei der ein Antriebszug für die Rollenkette zwischen diesen Schienen angeordnet ist.

10. Vorrichtung zum angetriebenen Drehen eines Wagens nach einem der Ansprüche 6 bis 9, bei der Positionierstifte, die vorwärts und rückwärts von der Bodenseite aus verschiebbar sind, um mit dem Wagen (4) in Eingriff zu kommen und sich davon zu trennen, ebenso wie eine Einrichtung (48) für das Zuführen von Druckluft, die mit einem Eingriffsstiftbetätigungszylinder des Wagens verbunden und davon getrennt wird, in jeder der Positionen auf der Rückseite des Eintrittes und der Vorderseite des Austrittes des gebogenen Abschnittes mit Bezugnahme auf die Bewegungsrichtung des Wagens angeordnet sind.

11. Reifenaufbausystem (1) bei Benutzung einer Vorrichtung zum angetriebenen Drehen eines Wagens nach einem der Ansprüche 6 bis 10, das aufweist: Wagen (4), auf denen eine Reifenwickeltrommel (3) positioniert und angeordnet ist; eine gleichlaufende Antriebseinrichtung (D1, D2), die gleichzeitig und diskontinuierlich einen jeden einer Vielzahl von Wagen überträgt, die auf einem geraden Abschnitt einer ovalen endlosen Bewegungsbahn über einen bestimmten Abstand ausgerichtet sind; und Arbeitsplätze (F), die bestimmte Arbeiten an der Reifenwickeltrommel durchführen und in Positionen angeordnet sind, die jeweils den Stillstandspositionen der Wagen entsprechen.

## Revendications

1. Procédé pour faire tourner par entraînement un chariot, comprenant les étapes ci-dessous :
engagement d'un chariot (4), positionné sur le côté du sol au niveau d'une partie courbée (31a, 32a) d'un trajet de déplacement sans fin de forme ovale (5), constitué par une paire de rails sans fin interne et externe (31, 32), dans un moyen de transport (37) entraîné le long de la partie courbée lorsque le chariot est entraîné au-dessous d'un guide des rails ; et
remorquage du chariot au-delà de l'ensemble de la longueur de la partie courbée par le moyen de transport ;
**caractérisé en ce que** le chariot (4) est engagé dans le moyen de transport (37) dans un état dans lequel le chariot est positionné et verrouillé sur le côté du sol, le chariot étant ensuite déverrouillé et remorqué au-delà de l'ensemble de la longueur de la partie courbée par le moyen de transport, le chariot étant ensuite de nouveau positionné et verrouillée sur le côté du sol et étant dégagé du moyen de transport.

2. Procédé pour faire tourner par entraînement un chariot selon la revendication 1, dans lequel le moyen de transport (37) est déplacé de manière alternative le long du même trajet par l'action de déplacement d'une chaîne à rouleaux (34).

3. Procédé pour faire tourner par entraînement un chariot selon les revendications 1 ou 2, dans lequel le chariot (4) est positionné sur le côté du sol en ajustant une goupille de positionnement (46), déplacée vers l'avant et vers l'arrière à partir du côté du sol, sur le chariot, pendant que le chariot est engagé dans le moyen de transport (37) en ajustant une goupille d'engagement (43), déplacée vers l'avant et vers l'arrière à partir du côté du chariot, sur le moyen de transport.

4. Procédé pour faire tourner par entraînement un chariot selon l'une quelconque des revendications 1 à 3, dans lequel le moyen de transport (37), déplacé vers l'extérieur pendant le remorquage du chariot (4), est ramené vers la position d'origine.

5. Procédé pour faire tourner par entraînement un chariot selon l'une quelconque des revendications 1 à 4, dans lequel de l'air comprimé est amené vers un cylindre d'engagement actionnant la goupille du chariot (4) avant l'engagement du chariot dans le moyen de transport (37) ou son dégagement de celui-ci.

6. Dispositif pour la mise en oeuvre d'un procédé pour faire tourner par entraînement un chariot selon l'une quelconque des revendications 1 à 5, dans lequel une chaîne à rouleaux sans fin (34) déplacée le long de la partie courbée, au-delà de l'ensemble de sa longueur dans le plan horizontal, est agencée de sorte que l'axe des rouleaux est aligné avec la ligne verticale, au moins un moyen de transport (37) pouvant s'engager dans le chariot (4) ou se dégager de celui-ci étant monté sur la chaîne à rouleaux.

7. Dispositif pour faire tourner par entraînement un chariot selon la revendication 6, dans lequel un rouleau de support du poids (40) est monté sur la chaîne à rouleaux (34) au niveau de chaque pas défini de son maillon de chaîne.

8. Dispositif pour faire tourner par entraînement un chariot selon les revendications 6 ou 7, dans lequel un matériau de résine résistant à l'usure (42), destiné à contacter le rouleau, est agencé sur un guide de la chaîne (41) au niveau d'une position située au moins à l'intérieur de la courbure de la chaîne à rouleaux (34), s'étendant le long de la partie courbée et contactant la chaîne.

9. Dispositif pour faire tourner par entraînement un chariot selon l'une quelconque des revendications 6 à 8, dans lequel la chaîne à rouleaux (34) s'étend entre la paire de rails interne et externe (31, 32), un train d'entraînement pour la chaîne à rouleaux étant agencé entre ces rails.

10. Dispositif pour faire tourner par entraînement un chariot selon l'une quelconque des revendications 6 à 9, dans lequel des goupilles de positionnement, pouvant être déplacées vers l'avant et vers l'arrière à partir du côté du sol, en vue d'un engagement dans le chariot (4) et d'un dégagement de celui-ci, ainsi que le moyen (48) d'amenée de l'air comprimé, connecté à un cylindre d'engagement actionnant la goupille du chariot et déconnecté de celui-ci, sont agencés au niveau de chacune des positions sur le côté arrière de l'entrée et de la partie avant de la sortie de la partie courbée par rapport à la direction de déplacement du chariot.

11. Système de confection de bandages pneumatiques (1) utilisant un dispositif pour faire tourner par entraînement un chariot selon l'une quelconque des revendications 6 à 10, comprenant des chariots (4) sur lesquels est positionné et agencé un tambour de confection de bandages pneumatiques (3), un moyen d'entraînement parallèle (D1, D2), transmettant de manière simultanée et intermittente chacun de plusieurs chariots alignés sur une partie droite d'un trajet de déplacement sans fin de forme ovale au-delà d'une distance définie, et des stations de travail (F) exécutant des travaux définis sur le tambour de confection de bandages pneumatiques et agencées au niveau de positions correspondant respectivement aux positions d'arrêt des chariots.
